# EUROPÄISCHE PATENTANMELDUNG

(11) **EP 3 460 202 A1**
(43) Veröffentlichungstag der Anmeldung: **27.03.2019**
(21) Anmeldenummer: 17192638.9
(22) Anmeldetag: 22.09.2017
(51) Int. Cl.: F01K 7/08, F01K 7/24

(54) **DAMPFTURBINENREGELUNG**

(71) Anmelder: Siemens Aktiengesellschaft, 80333 München (DE)
(72) Erfinder: Bennauer, Martin, 46242 Bottrop (DE); Borowski, Marc, 47445 Moers (DE); Schindler, Christoph, 45219 Essen (DE); Veltmann, David, 45128 Essen (DE); Winkel, Michael, 46284 Dorsten (DE)

(57) **Zusammenfassung**

Die Erfindung betrifft ein Verfahren zum Betreiben einer Dampfturbine (1), wobei die Dampfturbine (1) zumindest zwei Teilturbine (2a, 2b, 2c, 5) aufweist, wobei der Dampfturbine (1) ein Dampfturbinenregler (3) zugeordnet ist, der für jede der Teilturbinen (2a, 2b, 2c) je einen Teilturbinenregler (3a, 3b, 3c) aufweist, und wobei im Betrieb jeder Teilturbinenregler (3a, 3b, 3c) jeweilige Sollwerte mit jeweiligen Istwerten der jeweiligen Teilturbinen (2a, 2b, 2c, 5) vergleicht, um für die jeweiligen Teilturbinen (2a, 2b, 2c, 5) eine jeweilige Regelabweichung zu bestimmen.

## Beschreibung

Die Erfindung betrifft ein Verfahren zum Betreiben einer Dampfturbine, eine Dampfturbine mit einem Dampfturbinenregler und einen Dampfturbinenregler.

Die Anforderungen des Strommarktes eines Landes ändern sich im Verlauf der Zeit. Zudem differieren die Anforderungen auch zwischen Staaten, Kraftwerks- und Netzbetreibern. Beispielsweise legt naturgemäß ein Kraftwerk, dass mit einem kleinen Netz verbunden und zyklischen Verbrauchern verbunden ist mehr Wert auf eine exakte Frequenzregelung, als ein Kraftwerk, welches in einen großen Verbund von Kraftwerken einspeist. Gleiches gilt für die geforderten Startzeiten, Lastwechsel, Stillstandszeiten, usw. Diese Unterschiede der Betriebsweisen führen zu unterschiedlichen Anforderungen an die Fahrweise der Dampfturbine. Die sich ändernden bzw. staatenspezifischen Fahrweisen bedingen wiederrum eine Anpassung der Struktur der Dampfturbinenregelung. Die fest vorgegebene Struktur erlaubt aber nur mit großem Aufwand flexibel auf geforderte Fahrweisen und physikalische Randbedingungen zu reagieren.

Beispiele die eine größere Flexibilität des Dampfturbinenreglers fordern:
- Soll um eine größere Regelreserve vorzuhalten die Leistung bzw. die Frequenz mit der Mittel- und Niederdruckturbine geregelt werden und die Hochdruckturbine gleiten bzw. den Druck in dem Hochdrucksystem regeln, ist dazu eine Anpassung der Struktur nötig.
- Fahrweisen, bei denen eine Turbinenstufe gezielt eine Wärmespannung einregelt und die zweite die Gesamtleistung einregelt, können ohne Reglerstrukturänderung nicht realisiert werden.
- Die Überlasteinleitungen, deren Einsatz einem Optimum aus Wirtschaftlichkeit und Regelgüte erfolgen soll, verlangen unterschiedliche Zielgrößen vorzugeben.
- Sind die maximalen thermischen Spannungen einer Turbinenstufe während des Belastungsvorgangs ausgeschöpft, soll nur diese Turbinenstufe langsamer belasten. Die Leistung der Turbinenstufe bei der zulässigen Spannung nicht erreicht sind, soll dagegen entsprechend schneller die Leistung steigern und damit die Blocktransiente halten.

Eine fest vorgegebene Struktur des Dampfturbinenreglers reduziert die Flexibilität des Dampfturbinenbetriebs bzw. führt zu erheblichem Aufwand bei Änderungen des Dampfturbinen-Betriebskonzeptes.

Eine mehrstufige Dampfturbine ist z.B. aus der DE 60 121 679 T2 bekannt.

Es besteht daher Bedarf daran, Wege aufzuzeigen, wie eine Dampfturbine flexibler betrieben werden kann.

Erfindungsgemäß wird bei einer Dampfturbine mit zumindest zwei Teilturbinen ein Dampfturbinenregler verwendet, der für jede der Teilturbinen je einen Teilturbinenregler aufweist, wobei im Betrieb jeder Teilturbinenregler jeweilige Sollwerte mit jeweiligen Istwerten der jeweiligen Teilturbinen vergleicht, um für die jeweiligen Teilturbinen eine jeweilige Regelabweichung zu bestimmen.

Es werden also für jede Teilturbinen einzelne Teilturbinenregler für die Prozessgrößen verwendet und ggf. vorhandene physikalische Kopplungen nur noch über die Sollwerte der einzelnen Teilturbinenregler abgebildet. Eine Teilturbine ist durch diese Änderung in der Lage ihre Leistung, Druck oder auch thermischen Spannungen allein nach ihren eigenen Vorgaben und physikalischen Randbedingungen einzuregeln. Die Komplexität der Reglerstruktur wird dadurch deutlich reduziert und die Flexibilität im gleichen Maße gesteigert. So werden eine einfachere Struktur des Dampfturbinenreglers, flexiblere Betriebsweisen aufgrund jeweiliger Sollwerte, eine flexiblere Berücksichtigung von betrieblichen Randbedingungen, und ein optimaler Betrieb unter Berücksichtigung der Wirtschaftlichkeit und Regelgüte ermöglicht.

Bevorzugt steuern die Teilturbinenregler jeweilige Turbinenventile an, die den jeweiligen Teilturbinen zugeordnet sind. Die einzelnen Turbinenventile geben der Dampfturbine die Freiheit, die einzelnen Prozessgrößen Druck der jeweiligen Teilturbine, Leistung der Teilturbine, Temperaturspannung bzw. -abfall der Teilturbine unabhängig voneinander zu regeln. Die Turbinenventile können Frischdampfventile sein, die z.B. als klassische Drosselventile oder als Düsengruppe ausgebildet sind.

Es ist möglich, dass die Teilturbinenregler die jeweiligen Teilturbinen gemäß unterschiedlicher Betriebsarten betreiben. Bei den Betriebsarten kann es sich z.B. um eine Betriebsart Leistungsregelung, um eine Frequenzregelung, um eine Drehzahlregelung, um eine Frischdampf- oder Vordruckregelung oder um eine Gegendruckregelung handeln. Bei der Leistungsregelung ist die Regelgroße die elektrische Leistung, die an das öffentliche Verbundnetz abgegeben werden soll. Die Frequenzregelung wird bei einem Betrieb im Inselbetrieb gewählt, wenn der Hauptnetzschalter geöffnet wird, denn dann muss der Generator das Inselnetz versorgen. Dies ist bei Störfällen im Verbundnetz erforderlich. Die Regelgroße ist hier die Frequenz der Spannung bzw. indirekt die Drehzahl der Dampfturbine. Die Drehzahlregelung hingegen wird bei Leerlauf gewählt. Es wird die Drehzahl geregelt. Das ist z.B. beim Hochfahren der Fall, wo bestimmte Drehzahltrajektorien eingehalten werden müssen. Bei der Frischdampf- oder Vordruckregelung ist die Regelgröße der Frischdampfdruck, der auf Grund weiterer Verbraucher variiert. Die indirekte Regelung über die Dampfturbine ist schneller, d.h. dynamischer als die über den Brenner, da die Dampferzeugung im Vergleichsträger, d.h. wenige dynamisch ist. Die Gegendruckregelung kann zur Anwendung gelangen wenn eine Niederdruck-Turbinenstufe in eine Dampfschiene mündet.

Bevorzugt wird in einer der Betriebsarten mit einem der Teilturbinenregler ein jeweiliger Druckwert eingestellt. So kann die Prozessgröße Druck der jeweiligen Teilturbine unabhängig von anderen Werten geregelt werden. Auch thermische Randbedingungen wirken nur noch auf die betroffene Teilturbine ein.

Bevorzugt wird in einer der Betriebsarten mit einem der Teilturbinenregler ein jeweiliger Leistungswert eingestellt. So kann die Prozessgröße Leistung der Teilturbine unabhängig von anderen Werten geregelt werden.

Bevorzugt wird in einer der Betriebsarten mit einem der Teilturbinenregler ein jeweiliger Temperaturwert eingestellt. So kann die Prozessgröße Temperaturspannung der Teilturbine unabhängig von anderen Werten geregelt werden.

Bevorzugt werden als jeweilige Teilturbinenregler PID-Regler verwendet. PID-Regler (proportional-integral-derivative controller) bestehen aus Anteilen eines P-Gliedes, eines I-Gliedes und eines D-Gliedes. Er kann sowohl aus der Parallelstruktur oder der Reihenstruktur definiert werden. PID-Regler sind sehr anpassungsfähig, verhindert bei konstantem Sollwert eine bleibende Regelabweichung bei Führungs- und Störgrößensprung und können Verzögerungen, z.B. durch PT1-Glieder der Regelstrecke hervorgerufen, kompensieren und damit die Regelstrecke vereinfachen.

Ferner gehören zur Erfindung eine Dampfturbine mit einem Dampfturbinenregler und ein Dampfturbinenregler.

Im Folgenden wird eine bevorzugte Ausführungsform des erfindungsgemäßen Verfahrens anhand der beigefügten schematischen Zeichnungen erläutert. Es zeigt:

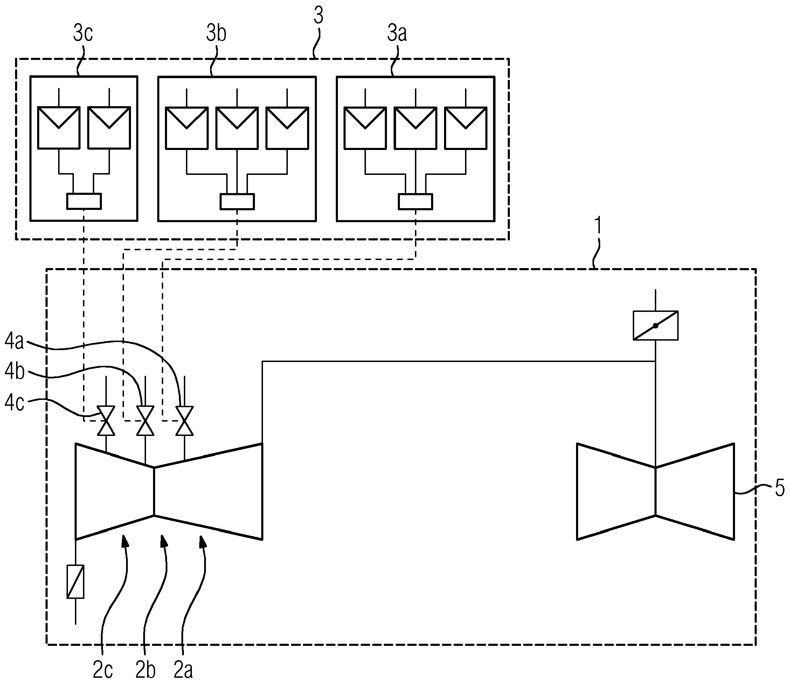

Fig. 1 eine schematische Darstellung einer Dampfturbine mit einem zugeordneten Dampfturbinenregler.

Dargestellt ist eine Dampfturbine 1 mit einem der Dampfturbine 1 zugeordneten Dampfturbinenregler 3.

Die Dampfturbine 1 kann Teil eines Turbosatzes sein, wie er in Kraftwerken Verwendung findet.

Die Dampfturbine 1 ist im vorliegenden Ausführungsbeispiel zweiflutig ausgebildet. Abweichend vom vorliegenden Ausführungsbeispiel kann die Dampfturbine auch einflutig ausgebildet sein.

Im vorliegenden Ausführungsbeispiel ist die Dampfturbine 1 drei Teilturbinen aufweisend ausgebildet. Dabei handelt es sich bei der ersten Teilturbine um eine Hochdruckdruckturbine mit einer ersten Stufengruppe 2b und mit einer zweiten Stufengruppe 2c, bei der zweiten Teilturbine um eine Mitteldruckturbine 2a und bei der dritten Teilturbine um eine Niederdruckturbine 5.

Zwei der drei Teilturbinen sind im vorliegenden Ausführungsbeispiel in einem gemeinsamen Gehäuse untergebracht, während die dritte Teilturbine, d.h. die Niederdruckturbine 5, in einem Einzelgehäuse befindet. Abweichend vom vorliegenden Ausführungsbeispiel kann auch jede der Teilturbinen je in einem Einzelgehäuse untergebracht sein.

Der Dampfturbinenregler 3 weist im vorliegenden Ausführungsbeispiel drei Teilturbinenregler 3a, 3b, 3c auf. Im vorliegenden Ausführungsbeispiel ist der erste Teilturbinenregler 3a der Niederdruckturbine, der zweite Teilturbinenregler 3b ist der Mitteldruckturbine und der dritte Teilturbinenregler 3c ist der Hochdruckturbine zugeordnet.

Die Teilturbinenregler 3a, 3b, 3c sind im vorliegenden Ausführungsbeispiel jeweils PID-Regler. Abweichend vom vorliegenden Ausführungsbeispiel können auch andere Reglertypen Verwendung finden. Die Teilturbinenregler 3a, 3b, 3c können als Analog- oder Digitalregler ausgebildet sein. Der Dampfturbinenregler 3 kann hierzu Hard- und/oder Softwarekomponenten aufweisen.

Die Teilturbinenregler 3a, 3b, 3c sind dazu ausgebildet, jeweilige Turbinenventile der jeweiligen Teilturbinen anzusteuern. Die Turbinenventile sind im vorliegenden Ausführungsbeispiel ein Mitteldruckventil 4a, ein Frischdampfventil 4b und ein zusätzlichen Frischdampfventil 4c, die jeweils z.B. als klassische Drosselventile oder als Düsengruppe ausgeführt sein können.

Die Teilturbinenregler 3a, 3b, 3c betreiben die jeweiligen Teilturbinengemäß unterschiedlicher Betriebsarten. Bei den Betriebsarten kann es sich z.B. um eine Betriebsart Leistungsregelung, um eine Frequenzregelung, um eine Drehzahlregelung, um eine Frischdampf- oder Vordruckregelung oder um eine Gegendruckregelung handeln.

In der Betriebsart Leistungsregelung (engl. power control) z.B. wird die in das öffentliche Verbundnetz abgegebene elektrische Leistung geregelt. Diese Betriebsart ist nur möglich, wenn ein Hauptnetzschalter geschlossen ist und damit ein von der Dampfturbine 1 angetriebener Generator starr mit dem Netz verbunden ist.

Z.B. wird beim Hochfahren sowie bei Sonderbetriebs- und - störfällen von Generator und Turbine die Drehzahl geregelt. Für Antriebe anderer Arbeitsmaschinen stellt dieser Modus indes den Standardfall dar. Die Betriebsart Drehzahlregelung (engl. speed control) ähnelt der Betriebsart Frequenzregelung bis auf den Fakt, dass der Generator keine Leistung produziert, also die Dampfturbine nicht belastet. Die einzige Verlustleistung entsteht durch Lagerreibung und evtl. durch direkt angetriebene Arbeitsmaschinen, wie Ölpumpen.

Wenn die Dampfturbine 1 als Stellglied für den Dampfdruck in der Niederdruckschiene eingesetzt wird, handelt es sich um die Betriebsart Gegendruckregelung (engl. back pressure control). Durch Betätigung eines Frischdampfventils wird sichergestellt, dass die entnommene Dampfmenge der Niederdruckverbraucher im Gleichgewicht mit der in die NiederdruckSchiene einströmenden Menge ist und der Druck gehalten wird. Beim Öffnen steigt der Gegendruck und umgekehrt. Die an das Verbundnetz abgegebene elektrische Leistung ist hier ebenfalls ein Nebenprodukt und schwankt.

So können z.B. die einzelnen Prozessgrößen Druck der jeweiligen Teilturbine, Leistung der Teilturbine und Temperaturspannung bzw. -abfall der Teilturbinen unabhängig voneinander geregelt werden.

Ferner sind die jeweiligen Teilturbinenregler 3a, 3b, 3c dazu ausgebildet, die Leistung oder Frequenz zu regeln oder sie im Gleitbetrieb zu betrieben. Hierzu sind die jeweiligen Teilturbinenregler 3a, 3b, 3c mit den jeweiligen Turbinenventilen, d.h. im vorliegenden Ausführungsbeispiel mit dem Mitteldruckventil 4a, dem Frischdampfventil 4b und dem zusätzlichen Frischdampfventil 4c zum Einstellen eines jeweiligen Druckwertes, zum Einstellen eines jeweiligen Leistungswertes oder zum Einstellen eines jeweiligen Temperaturwertes ausgebildet.

Im Betrieb werden den jeweiligen Teilturbinenregler 3a, 3b, 3c für die jeweilige Teilturbine jeweilige Sollwerte vorgegeben, die mit jeweiligen Istwerten der jeweiligen Teilturbinen vergleichen werden, um für die jeweiligen Teilturbineneine jeweilige Regelabweichung zu bestimmen.

Anhand der Regelabweichung bestimmt dann der jeweilige Teilturbinenregler 3a, 3b, 3c jeweilige Stellgrößen, z.B. unter Verwendung von PID-Algorithmen.

So kann eine größere Regelreserve vorgehalten werden, in dem z.B. die Leistung bzw. die Frequenz mit der ersten Stufengruppe 2b und der zweiten Stufengruppe 2c der Hochdruckturbine geregelt wird, während z.B. die Mitteldruckturbine 2a, gleitet.

Ferner kann nun z.B. für eine erste Teilturbine, d.h. die erste Stufengruppe 2b und die zweite Stufengruppe 2c der Hochdruckturbine gezielt eine Wärmespannung einregelt und für zweite Teilturbine, d.h. die 2cMitteldruckturbine 2a die Gesamtleistung geregelt werden, ohne das Strukturänderungen erforderlich sind.

Des Weiteren können unterschiedliche Zielgrößen vorgegeben werden, so dass Überlasteinleitungen möglich werden, deren Einsatz unter einem Optimum aus Wirtschaftlichkeit und Regelgüte erfolgen soll.

Außerdem können die einzelnen Teilturbinen unterschiedlich dynamisch belastet werden, um si die Blocktransiente zu halten.

Schließlich wird so die Komplexität der Reglerstruktur deutlich reduziert und die Flexibilität im gleichen Maße gesteigert. So werden eine einfachere Struktur des Dampfturbinenreglers 3, flexiblere Betriebsweisen allein über die jeweiligen Sollwerte, eine flexiblere Berücksichtigung von betrieblichen Randbedingungen, und ein optimaler Betrieb unter Berücksichtigung der Wirtschaftlichkeit und Regelgüte ermöglicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Dampfturbine (1),
wobei die Dampfturbine (1) zumindest zwei Teilturbinen (2a, 2b, 2c, 5) aufweist, wobei der Dampfturbine (1) ein Dampfturbinenregler (3) zugeordnet ist, der für jede der Teilturbinen (2a, 2b, 2c, 5) je einen Teilturbinenregler (3a, 3b, 3c) aufweist, und wobei im Betrieb jeder Teilturbinenregler (3a, 3b, 3c) jeweilige Sollwerte mit jeweiligen Istwerten der jeweiligen Teilturbinen (2a, 2b, 2c, 5) vergleicht, um für die jeweiligen Teilturbine (2a, 2b, 2c, 5) eine jeweilige Regelabweichung zu bestimmen.

2. Verfahren nach Anspruch 1,
wobei die Teilturbinenregler (3a, 3b, 3c) jeweilige Turbinenventile (4a, 4b, 4c) ansteuern, die den jeweiligen Teilturbinen (2a, 2b, 2c, 5) zugeordnet sind.

3. Verfahren nach Anspruch 1 oder 2,
wobei die Teilturbinenregler (3a, 3b, 3c) die jeweiligen Teilturbinen (2a, 2b, 2c, 5) gemäß unterschiedlicher Betriebsarten betreiben.

4. Verfahren nach Anspruch 3,
wobei in einer der Betriebsarten mit einem der Teilturbinenregler (3a, 3b, 3c) ein jeweiliger Druckwert eingestellt wird.

5. Verfahren nach Anspruch 3 oder 4,
wobei in einer der Betriebsarten mit einem der Teilturbinenregler (3a, 3b, 3c) ein jeweiliger Leistungswert eingestellt wird.

6. Verfahren nach Anspruch 3, 4 oder 5,
wobei in einer der Betriebsarten mit einem der Teilturbinenregler (3a, 3b, 3c) ein jeweiliger Temperaturwert eingestellt wird.

7. Verfahren nach einem der Ansprüche 1 bis 6,
wobei als jeweilige Teilturbinenregler (3a, 3b, 3c) PID-Regler verwendet werden.

8. Dampfturbine (1) mit zumindest zwei Teilturbinen (2a, 2b, 2c, 5),
wobei der Dampfturbine (1) ein Dampfturbinenregler (3) zugeordnet ist, der für jede der Teilturbinen (2a, 2b, 2c, 5) je einen Teilturbinenregler (3a, 3b, 3c) aufweist, und wobei jeder Teilturbinenregler (3a, 3b, 3c) dazu ausgebildet ist, im Betrieb jeweilige Sollwerte mit jeweiligen Istwerten der jeweiligen Teilturbine (2a, 2b, 2c, 5) zu vergleichen, um für die jeweilige Teilturbine (2a, 2b, 2c, 5) eine jeweilige Regelabweichung zu bestimmen.

9. Dampfturbine (1) nach Anspruch 8,
wobei die Teilturbinenregler (3a, 3b, 3c) dazu ausgebildet sind, jeweilige Turbinenventile (4a, 4b, 4c) ansteuern, die den jeweiligen Teilturbinen (2a, 2b, 2c, 5) zugeordnet sind.

10. Dampfturbine (1) nach Anspruch 8 oder 9,
wobei die Teilturbinenregler (3a, 3b, 3c) dazu ausgebildet sind, die jeweiligen Teilturbinen (2a, 2b, 2c, 5) gemäß unterschiedlicher Betriebsarten zu betreiben.

11. Dampfturbine (1) nach Anspruch 10,
wobei einer der Teilturbinenregler (3a, 3b, 3c) in einer der Betriebsarten zum Einstellen eines jeweiligen Druckwertes ausgebildet ist.

12. Dampfturbine (1) nach Anspruch 10 oder 11,
wobei einer der Teilturbinenregler (3a, 3b, 3c) in einer der Betriebsarten zum Einstellen eines jeweiligen Leistungswertes ausgebildet ist.

13. Dampfturbine (1) nach Anspruch 10, 11 oder 12,
wobei einer der Teilturbinenregler (3a, 3b, 3c) in einer der Betriebsarten zum Einstellen eines jeweiligen Temperaturwertes ausgebildet ist.

14. Dampfturbine (1) nach einem der Ansprüche 10 bis 13, wobei die jeweiligen Teilturbinenregler (3a, 3b, 3c) PID-Regler sind.

15. Dampfturbinenregler (3) für eine Dampfturbine (1) nach einem der Ansprüche 8 bis 14.
